# EUROPEAN PATENT APPLICATION

(11) **EP 1 850 413 A1**
(43) Date of publication of application: **31.10.2007**
(21) Application number: 07106756.5
(22) Date of filing: 23.04.2007
(51) Int. Cl.: H01M 8/02

(54) **Separator for Fuel Cell, Method of Preparing Same, and Fuell Cell System Including Same**

(30) Priority: 28.04.2006 KR 20060038797
(71) Applicant: Samsung SDI Co., Ltd., Suwon-city, Kyungki-do 442-390 (KR)
(72) Inventor: Shin, Chan-Gyun, Kyunggi-do (KR); Han, Sang-Il, Kyunggi-do (KR); Son, In-Hyuk, Kyunggi-do (KR)
(74) Representative: Killin, Stephen James

(57) **Abstract**

The separator for a fuel cell according to the present invention includes a substrate (20) including flow channels (40), and a surface-treatment layer (50) disposed on the flow channels. The surface-treatment layer (50) has a contact angle no more than 30° when measured with water. The separator for a fuel cell can smoothly supply an oxidant and a fuel and easily release reaction products produced during the electrochemical reaction of the fuel cell, and can thereby improve fuel cell characteristics.

## Description

The present invention relates to a fuel cell system, and more particularly relates to a separator for a fuel cell that can smoothly supply an oxidant and a fuel and can easily release reaction products produced during the electrochemical reaction of the fuel cell, and can thereby improve fuel cell characteristics; a method of manufacturing the same; and a fuel cell system including the same.

A fuel cell is a power generation system for producing electrical energy through an electrochemical redox reaction of an oxidant and hydrogen in a hydrocarbon-based material such as methanol, ethanol, or natural gas. Such a fuel cell is a clean energy source that can replace fossil fuels. Typically, a fuel cell includes a stack composed of unit cells and produces various ranges of power output. Since a typical fuel cell has a four to ten times higher energy density than a small lithium battery fuel cells have been highlighted as small portable power sources.

Representative exemplary fuel cells include a polymer electrolyte membrane fuel cell (PEMFC) and a direct oxidation fuel cell (DOFC). The direct oxidation fuel cell includes a direct methanol fuel cell that uses methanol as a fuel.

The polymer electrolyte fuel cell has advantages of high energy density and high power, but it also has problems in the need to carefully handle hydrogen gas, and the requirement of accessory facilities such as a fuel reforming processor for reforming methane or methanol, natural gas, and the like in order to produce hydrogen as the fuel gas.

In contrast, a direct oxidation fuel cell has a lower energy density than that of the polymer electrolyte fuel cell, but it has the advantages of easy handling of a fuel, being capable of operating at room temperature due to its low operating temperature, and no need for additional fuel reforming processors.

In the above fuel cell, the stack that generates electricity substantially includes several to scores of unit cells stacked in multiple layers, and each unit cell is formed of a membrane-electrode assembly (MEA) and a separator (also referred to as a bipolar plate). The membrane-electrode assembly is composed of an anode (also referred to as a "fuel electrode" or an "oxidation electrode") and a cathode (also referred to as an "air electrode" or a "reduction electrode") that are separated by a polymer electrolyte membrane.

A fuel is supplied to the anode and adsorbed on catalysts of the anode, and the fuel is oxidized to produce protons and electrons. The electrons are transferred into the cathode via an external circuit, and the protons are also transferred into the cathode through the polymer electrolyte membrane. In addition, an oxidant is supplied to the cathode, and then the oxidant, protons, and electrons are reacted on catalysts of the cathode to produce electricity along with water.

The present invention provides a separator for a fuel cell that can smoothly supply an oxidant and a fuel by easily releasing reaction products produced during electrochemical reactions of a fuel cell, and can therefore improve fuel cell characteristics; a method of manufacturing the separator; and a fuel cell system that includes the separator.

In a first aspect of the present invention, a separator is provided for a fuel cell that includes a substrate including flow channels, and a surface-treatment layer disposed on the flow channels. The surface-treatment layer has a contact angle of 30°or less when measured with water. In an embodiment, the contact angle is 20°or less.

The surface-treatment layer may include- a hydrophilic functional group including an element selected from the group consisting of oxygen, nitrogen, sulfur, and combinations thereof. Examples of the hydrophilic functional group include at least one functional group selected from the group consisting of hydroxyl (OH), amino (NH₂), carboxyl (COOH), carbonyl (CO), sulfonic acid (SO₃H), alkoxy, and combinations thereof.

The substrate may be made of at least one material selected from the group consisting of a metal, graphite, a carbon-resin composite, and combinations thereof. The substrate may be subjected to a surface pre-treatment selected from the group consisting of polarization using a radioactive ray, oxidation, sand papering, corona treatment, rubbing, pressing, and combinations thereof.

In a second aspect of the present invention, a method of manufacturing a separator for a fuel cell is provided that includes: forming a flow channel in a substrate; forming a surface-treatment layer in the flow channel using a composition including a silane compound having a hydrophilic functional group; and washing and drying the substrate including the surface-treatment layer.

The substrate may be subjected to a surface pre-treatment selected from the group consisting of polarization using radioactive rays, oxidation, sand papering, corona treatment, rubbing, pressing, and combinations thereof. In an embodiment of the present invention, oxidation treatment including UV radiation after acid treatment may be appropriate for the pre-treatment.

The silane compound having a hydrophilic functional group may be represented by the following Formula 1:

[Chemical Formula 1] X-Si(R¹)₃

wherein, in the above Formula 1, X is a hydrophilic functional group including an element selected from the group consisting of oxygen, nitrogen, sulfur, and combinations thereof, or X is an alkyl group substituted with the hydrophilic functional group, and R¹ is hydrogen, an alkyl group, an alkoxy group, or a halogen.

X may be at least one hydrophilic functional group selected from the group consisting of hydroxyl (OH), amino (NH₂), carboxyl (COOH), carbonyl (CO), sulfonic acid (SO₃H), or alkoxy groups, and combinations thereof or an alkyl group substituted with the hydrophilic functional group.

The silane compound having the hydrophilic functional group may include at least one compound selected from the group consisting of 3-aminoalkyltrialkoxysilane, 2-(carboxylalkylthio) alkyltrialkylsilane, (3-heptafluoroalkoxy)alkyl trihalogensilane, and combinations thereof. The concentration of the silane compound having a hydrophilic functional group may be 5 to 500 mM.

The washing may be performed using at least one solvent selected from the group consisting of toluene, acetone, and combinations thereof. The drying may be performed under a reduction atmosphere and at a temperature of 20 to 50° C. After washing the substrate with the surface-treatment layer and drying, the substrate with the surface-treatment layer may be subjected to a surface post-treatment selected from the group consisting of UV radiation, plasma treatment, and combinations thereof.

In a third aspect of the present invention, a fuel cell system is provided that includes at least one electricity generating element, a fuel supplier that supplies the electricity generating element with a fuel, and an oxidant supplier that supplies the electricity generating element with an oxidant. The electricity generating element includes a membrane-electrode assembly and separators arranged at each side thereof. The membrane-electrode assembly includes a cathode and an anode facing each other, and a polymer electrolyte membrane interposed therebetween. The fuel cell system may be a direct oxidation fuel cell system. The fuel cell system may be a breathing-type or passive-type direct oxidation fuel cell system.

In a fourth aspect of the invention, there is provided a separator for a fuel cell obtainable by a method according to the invention in its second aspect.

In a fifth aspect of the invention, there is provided a fuel cell system or electricity generating element comprising a separator according to the invention in its first aspect.

In a sixth aspect of the invention, there is provided the use of a separator according to the invention in its first or fourth aspects for a fuel cell system or electricity generating element.

Additional embodiments and advantages of the invention will be set forth in part in the description which follows and, in part, will be apparent from the description, or may be learned by practice of the invention.

These and/or other aspects and advantages of the invention will become apparent and more readily appreciated from the following description of the embodiments, taken in conjunction with the accompanying drawings of which:
FIGURE 1 is a schematic cross-sectional view showing a separator according to an example embodiment of the present invention;
FIGURE 2A is a view showing a contact angle with respect to a substrate wherein the contact angle is 0°;
FIGURE 2B is a view showing a contact angle with respect to a substrate wherein the contact angle is between 0° and 90°;
FIGURE 2C is a view showing a contact angle with respect to a substrate wherein the contact angle is between 90° and 180°;
FIGURE 2D is a view showing a contact angle with respect to a substrate wherein the contact angle is 180°;
FIGURE 3 schematically shows the structure of a fuel cell system according to an example embodiment of the present invention;
FIGURE 4A is a photograph showing liquid flow in a separator according to Example 1;
FIGURE 4B is a photograph showing liquid flow in a separator according to Comparative Example 1;
FIGURE 5 is a graph showing voltage drop of single cells including the separators according to Examples 1 to 3;
FIGURE 6 is a graph showing voltage drop of single cells including the separators according to Comparative Examples 1 to 3;
FIGURE 7 is a graph showing output power density of single cells including the separators according to Examples 1 to 3; and
FIGURE 8 is a graph showing output power density of single cells including the separators according to Comparative Examples 1 to 3.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

In this specification, "alkyl" means a C1 to C20 alkyl group, preferably a C1 to C10 alkyl group. And, "alkoxy" means a C1 to C20 alkoxy group, preferably a C1 to C10 alkoxy group.

In general, a separator for a fuel cell separates each membrane-electrode assembly and provides a passage for supplying an anode and a cathode of the membrane-electrode assembly with an oxidant and a fuel required for an electrochemical reaction of the fuel cell, and also a passage for releasing water and carbon dioxide produced from the electrochemical reaction. In addition, the separator can prevent dangers of a fuel cell, like explosion and combustion, caused by direct contact of the reactants, i.e., hydrogen and an oxidant. Accordingly, the separator may include a substrate with a low reactant transmission rate and excellent electron conductivity for active electron movement.

An initial separator was made by mechanically processing a metal, or molding or pressing graphite. However, since a metal has high strength, the separator can be fabricated to be thin but may deteriorate conductivity and decrease the life cycle of a battery. In addition, since a graphite material has high conductivity but is weak and porous, the separator should be fabricated to have at least a minimum predetermined thickness, or the separator may allow transmission of the reactants. Accordingly, when a separator cannot smoothly supply a fuel or an oxidant or release a reaction product such as water or carbon dioxide, the power output characteristics of the fuel cell can deteriorate.

The present invention solves this problem by forming a hydrophilic surface-treatment layer on a flow channel in the substrate of a separator, so that the separator can supply an oxidant and a fuel and can smoothly release reaction products generated from the electrochemical reaction of the fuel cell, and thereby, can improve battery characteristics.

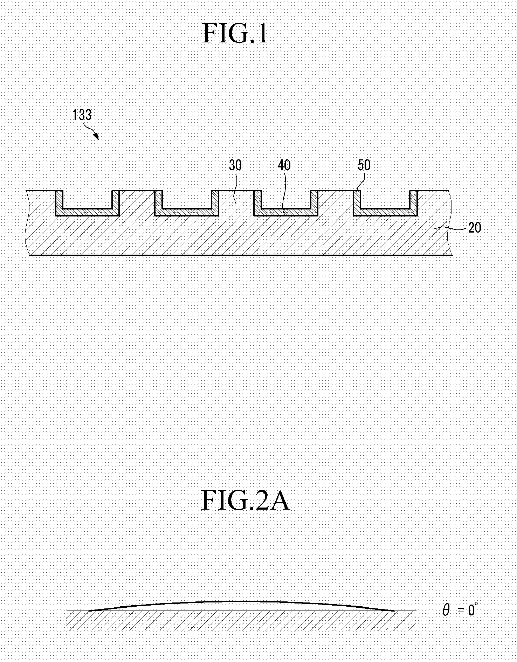

FIGURE 1 schematically shows a cross-sectional view of a separator for a fuel cell according to an example embodiment of the present invention. Referring to FIGURE 1, a separator 133 includes a substrate 20 formed with a series of ribs 30, flow channels 40 and a surface-treatment layer 50 formed on each flow channel 40.

The substrate 20 plays the role of a conductor connecting a supporter of the separator 133 and an anode and a cathode coupled in series. The flow channel 40 is used to supply an oxidant and a fuel for the fuel cell reaction to an anode and a cathode of a membrane-electrode assembly.

The substrate 20 may include a metal, graphite, a carbon-resin composite, or the like. The metal may include stainless steel, aluminum, titanium, copper, or an alloy thereof. In addition, the carbon-resin composite may include a composite of a resin selected from the group consisting of an epoxy-based resin, an ester-based resin, a vinylester-based resin, a urea resin, and a combination thereof, and a carbon such as graphite and the like. However, the substrate 20 of the present invention is not limited thereto.

The substrate 20 may be subjected to a surface pre-treatment in a method selected from the group consisting of polarization using radioactive rays, oxidation treatment, sand papering, corona treatment, rubbing, pressing, and combinations thereof in order that the surface-treatment layer 50 can be easily formed on the substrate 20. The substrate 20 includes the surface-treatment layer 50 on the flow channel 40. The surface-treatment layer 50 is disposed inside the flow channel 40, but not on a rib 30.

The surface-treatment layer 50 facilitates reaction products, such as carbon dioxide and water, including a hydrophilic functional group to be smoothly released, and thereby, promotes oxidation of a fuel and reduction of an oxidant. The hydrophilicity of the surface-treatment layer 50 and the amount of surface energy it has can be evaluated by measuring the contact angle with the surface-treatment layer 50. As the hydrophilicity of the substrate can be quantitatively determined by measuring the contact angle with respect to the surface, which can be described referring to FIGURES 2A to 2D herein below

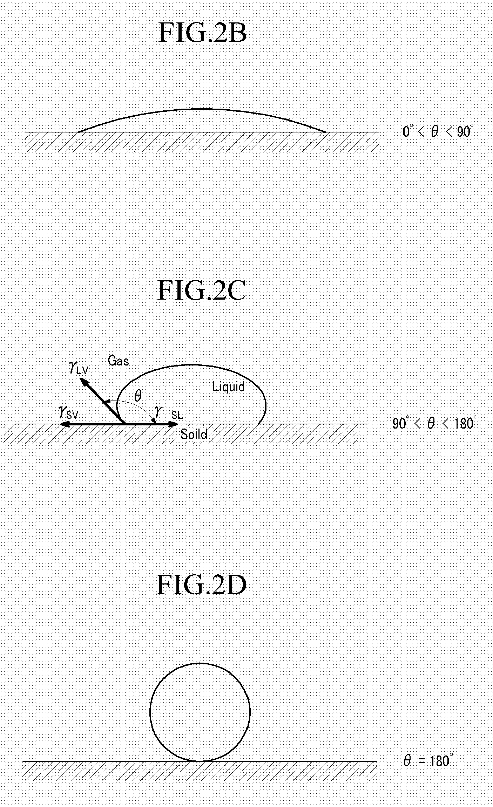

As shown in FIGURES 2A to 2D, the contact angle is determined between the contact surface at a liquid-solid-gas interface and the contact point of the end point of the water drop curve contacted with the solid surface. Accordingly, the contact angle is 0 in FIGURE 2A, the contact angle is 0 < θ < 90° in FIGURE 2B, the contact angle is 90° < θ < 180° in FIGURE 2C, and the contact angle is 180° in FIGURE 2D. That is, if the contact angle is 90° or more, the surface is classified as hydrophobic, but if the contact angle is less than 90°, the surface is determined as a hydrophilic surface.

According to an example embodiment of the present invention, the surface-treatment layer 50 included in the separator 133 may have a contact angle no more than 30° when measured with water. According to another example embodiment of the present invention, the surface-treatment layer 50 has a contact angle no more than 20°. According to another example embodiment of the present invention, the surface-treatment layer 50 may have a contact angle ranging from 0 through 10°. According to yet another example embodiment of the present invention, the surface-treatment layer 50 may have a contact angle ranging from 0.001° to 5°. When the surface-treatment layer 50 has a contact angle of more than 30°, it may have deteriorated hydrophilic characteristics, hindering liquid flow According to another example embodiment of the present invention, water can be used and deionized water is particularly appropriate.

The surface-treatment layer 50 can be formed by treating a silane compound having a hydrophilic functional group. Accordingly, the surface-treatment layer 50 may include a hydrophilic functional group including an element selected from the group consisting of oxygen, nitrogen, sulfur, and combinations thereof. The surface-treatment layer 50 includes a hydrophilic functional group selected from the group consisting of hydroxyl (OH), amino (NH₂), carboxyl (COOH), carbonyl (CO), sulfonic acid (SO₃H), alkoxy, and combinations thereof. According to an example embodiment of the present invention, a hydrophilic functional group selected from the group consisting of hydroxyl, amino, and combinations thereof may be appropriate.

A separator 133 with the above structure can be prepared as follows: forming a flow channel 40 in a substrate 20; disposing a surface-treatment layer 50 on the flow channel 40 by using a composition including a silane compound with a hydrophilic functional group; washing the substrate 20 with the surface-treatment layer 50; and drying the substrate 20 with the surface treatment layer 50.

The substrate 20 is the same as described above. The substrate 20 may be subjected to a surface pre-treatment selected from the group consisting of polarization using radioactive rays, oxidation, sand papering, corona treatment, rubbing, pressing, and combinations thereof so that the surface-treatment layer may easily be formed on the substrate 20. According to an example embodiment of the present invention oxidization may be utilized to form a surface treatment layer 50.

Specifically, the oxidation may be performed by UV radiation after treating with acid. The acid treatment can be performed by immersing substrate 20 in a conventional acid solution such as sulfuric acid, hydrogen peroxide, and the like.

When the acid solution includes a mixed solution of sulfuric acid and hydrogen peroxide, the sulfuric acid and the hydrogen peroxide are mixed in a volume ratio of 10:90 to 40:60. According to an example embodiment of the present invention the sulfuric acid and the hydrogen peroxide are mixed in a volume ratio of 30:70. After the acid treatment, the substrate 20 is dried. The drying process may then be performed under a reduction atmosphere of hydrogen, nitrogen, or the like.

Then, the acid-treated substrate 20 is radiated by UV rays to form a hydroxyl group on the surface thereof, thereby increasing hydrophilicity. Herein, the UV radiation may be performed for 10 minutes to 10 hours. In addition, the UV radiation may be performed at a temperature ranging from 50 to 70°C. The pre-treatment of the substrate 20 surface can be performed on the substrate 20 itself before forming a flow channel 40 therein, or on the flow channel 40 after forming the flow channel 40 in the substrate 20.

Subsequently, the substrate 20 with the flow channel can be treated by using a composition including a silane compound with a hydrophilic functional group to form a surface-treatment layer thereon. The silane compound with a hydrophilic functional group may include a compound represented by the following Formula 1:

[Chemical Formula 1] X-Si(R¹)₃

wherein, in the above Formula 1, X is a hydrophilic functional group including an element selected from the group consisting of oxygen, nitrogen, sulfur, and combinations thereof, or an alkyl substituted with the hydrophilic functional group, and R¹ is hydrogen, alkyl, alkoxy, or a halogen.

X may be at least one hydrophilic functional group selected from the group consisting of hydroxyl (OH), amino (NH₂), carboxyl (COOH), ketone (CO), sulfonic acid (SO₃H), alkoxy, and combinations thereof, or an alkyl substituted with the hydrophilic functional group.

The silane compound having the hydrophilic functional group includes at least one compound selected from the group consisting of 3-aminoalkyltrialkoxysilane, 2-(carboxylalkylthio) alkyltrialkylsilane, (3-heptafluoroalkoxy)alkyl trihalogensilane, and combinations thereof. More specific examples of the silane compound having the hydrophilic functional group include at least one compound selected from the group consisting of (3-aminopropyl)triethoxysilane, 2-(carboxylmethylthio)ethyltrimethylsilane, (3-heptafluoroisopropoxy)propyl trichlorosilane, and combinations thereof.

The composition including a silane compound includes a solvent selected from water, an organic solvent, or a mixed solvent. The organic solvent may include a solvent having compatibility with water selected from the group consisting of an alcohol solvent such as methanol, ethanol, propanol, butanol, and so on; a CELLOSOLVE®-based solvent such as methyl CELLOSOLVE® (Union Carbide Corp. subsidiary of Dow Chemical Co.); dimethylformamide; or acetone. The organic solvent may be a mixed solvent.

The composition including a silane compound having a hydrophilic functional group includes 5 to 500 mM of the silane compound. According to an example embodiment of the present invention, the composition including a silane compound having a hydrophilic functional group includes 5 to 20 mM of the silane compound. When the composition has a silane compound concentration of less than 5 mM, a uniform coating of the surface treatment layer 50 may be difficult to realize. Conversely, when the silane compound concentration is more than 500 mM, the surface thickness may be difficult to control.

The hydrophilic coating layer can be disposed by coating a composition including a silane compound with a hydrophilic functional group on a flow channel 40 in the substrate 20 or by immersing the substrate 20 into the composition including a silane compound after taping the part not to be coated with masking tape. The coating can be performed by a common slurry coating method.

Then, the substrate 20 having a surface-treatment layer 50 can be washed and dried, preparing a separator 133 for a fuel cell. The washing is performed using at least one solvent selected from the group consisting of toluene, acetone, and combinations thereof. According to an example embodiment of the present invention, toluene is appropriate for the washing process. In addition, the washing can be performed with an ultrasound treatment. The ultrasound treatment may easily remove impurities, forming a pure surface-treatment layer 50.

The drying is performed under a reduction atmosphere of nitrogen, argon, a mixed gas thereof, or the like. The drying is performed at a temperature of 20 to 50° C. According to an example embodiment of the present invention, the drying is performed at a temperature of 40 to 50° C. When the drying is performed at a temperature of less than 20° C, the drying process may take too long. Conversely, when the drying is performed at a temperature of more than 50° C, the solvent may evaporate too quickly resulting in nonuniform coating.

After washing the substrate 20 with the surface-treatment layer 50 and drying, the substrate 20 with the surface-treatment layer 50 may be subjected to a surface post-treatment selected from the group consisting of UV radiation, plasma treatment, and combinations thereof to increase hydrophilicity in the surface-treatment layer. The surface post-treatment may be performed by methods known in the art.

Once a separator 133 for a fuel cell prepared in the above method includes a surface-treatment layer 50, the separator 133 can smoothly supply the fuel cell with an oxidant and a fuel, and can easily release products from the electrochemical reaction of the fuel cell.

In addition, the separator 133 can be used for at least one of the anode and the cathode of a fuel cell. Since the separator 133 can smoothly release the reaction products because of the surface-treatment layer 50 thereon, the separator 133 may be ideally used for an anode.

In other words, the separator 133 can promote oxidation of a fuel and reduction of an oxidant, and thereby, can improve power output characteristics of a fuel cell. This improvement effect can be maximized in a direct oxidation fuel cell, and particularly, a breathing-type (referred to as a semi-passive-type) or a passive-type direct oxidation fuel cell.

According to another example embodiment of the present invention, a fuel cell system including the above separator is provided. Such fuel cell system includes at least one electricity generating element, a fuel supplier, and an oxidant supplier.

The electricity generating element includes a membrane-electrode assembly and separators positioned at both sides of the membrane-electrode assembly to generate electricity through oxidation of a fuel and reduction of an oxidant. One or more electricity generating elements may be stacked as needed, and the number of the stacked electricity generating elements can be controlled according to required output voltages.

The membrane-electrode assembly includes a polymer electrolyte membrane, and a cathode and an anode disposed on each side of the polymer electrolyte membrane. The polymer electrolyte membrane plays the role of exchanging ions by transferring the protons produced at the anode to the cathode. Therefore, the polymer electrolyte membrane includes a highly proton conductive polymer. The proton conductive polymer may be any polymer resin having a cation exchange group selected from the group consisting of a sulfonic acid group, a carboxylic acid group, a phosphoric acid group, a phosphonic acid group, and derivatives thereof, at its side chain.

Non-limiting examples of the polymer resin include at least one proton conductive polymer selected from the group consisting of fluoro-based polymers, benzimidazole-based polymers, polyimide-based polymers, polyetherimide-based polymers, polyphenylenesulfide-based polymers, polysulfone-based polymers, polyethersulfone-based polymers, polyetherketone-based polymers, polyether-etherketone-based polymers, and polyphenylquinoxaline-based polymers. In an example embodiment of the present invention, the proton conductive polymer is at least one polymer selected from the group consisting of poly(perfluorosulfonic acid), poly(perfluorocarboxylic acid), a copolymer of tetrafluoroethylene and fluorovinylether having a sulfonic acid group, defluorinated polyetherketone sulfide, poly(aryl ketone), poly(2,2'-(m-phenylene)-5,5'-bibenzimidazole), poly (2,5-benzimidazole), copolymers thereof, and mixtures thereof.

The H in the cation exchange group of the proton conductive polymer can be replaced with Na, K, Li, Cs, or tetrabutylammonium. When the H is replaced with Na in an ion exchange group at the terminal end of the proton conductive group, NaOH is used. When the H is replaced with tetrabutylammonium, tetrabutylammonium hydroxide is used. K, Li, or Cs can also be used to replace H by using appropriate compounds. A method of replacing H is known in the related art, and therefore is not described in detail.

A cathode and an anode are disposed at each side of the polymer electrolyte membrane. The anode includes a catalyst layer and an electrode substrate for fuel transfer. At the catalyst layer of the anode, a fuel is supplied through a separator to produce electrons and protons by an oxidation reaction of the fuel. The cathode also includes a catalyst layer and an electrode substrate for oxidant transfer. At the catalyst layer of the cathode, an oxidant supplied through a separator reacts with protons supplied through a polymer electrolyte membrane to produce water by an oxidant reduction reaction.

The catalyst layers of the anode and the cathode catalytically help fuel oxidation and oxidant reduction reactions. Representative examples of the catalyst are those based on platinum or similar metals. Such catalysts include platinum, ruthenium, osmium, a platinum-ruthenium alloy, a platinum-osmium alloy, a platinum-palladium alloy, a platinum-M alloy, or combinations thereof, where M is a transition element selected from the group consisting of Ga, Ti, V, Cr, Mn, Fe, Co, Ni, Cu, Zn, Sn, Mo, W, Rh, Ru, and combinations thereof. The anode and the cathode may include the same catalyst. However, in a direct oxidation fuel cell, since an anode catalyst may be poisoned by CO, CO-tolerant platinum-ruthenium alloy catalysts may be suitably used as the anode catalyst. Representative examples of the catalysts include at least one catalyst selected from the group consisting of Pt, Pt/Ru, Pt/W, Pt/Ni, Pt/Sn, Pt/Mo, Pt/Pd, Pt/Fe, Pt/Cr, Pt/Co, Pt/Ru/W, Pt/Ru/Mo, Pt/Ru/V, Pt/Fe/Co, Pt/Ru/Rh/Ni, Pt/Ru/Sn/W, and combinations thereof.

Such a catalyst may be used while being supported on a carrier. The carrier may include carbon-based materials such as graphite, denkablack, ketjenblack, acetylene black, carbon nanotube, carbon nanofiber, carbon nanowire, carbon nanoball, activated carbon, and so on, or an inorganic material particulate such as alumina, silica, zirconia, titania, and so on.

The catalyst layers of the anode and the cathode may further include a binder resin to improve adherence and proton transference. The binder resin may be a proton conductive polymer resin having a cation exchange group selected from the group consisting of a sulfonic acid group, a carboxylic acid group, a phosphoric acid group, a phosphonic acid group, and derivatives thereof, at its side chain.

Non-limiting examples of the polymer include at least one proton conductive polymer selected from the group consisting of fluoro-based polymers, benzimidazole-based polymers, polyimide-based polymers, polyetherimide-based polymers, polyphenylenesulfide-based polymers, polysulfone-based polymers, polyethersulfone-based polymers, polyetherketone-based polymers, polyether-etherketone-based polymers, and polyphenylquinoxaline-based polymers. In an example embodiment of the present invention, the proton conductive polymer is at least one polymer selected from the group consisting of poly(perfluorosulfonic acid), poly(perfluorocarboxylic acid), a copolymer of tetrafluoroethylene and fluorovinylether having a sulfonic acid group, defluorinated polyetherketone sulfide, poly(aryl ketone), poly(2,2'-(m-phenylene)-5,5'-bibenzimidazole), poly (2,5-benzimidazole), and copolymers thereof.

The binder resin may be used singularly or as a mixture. Optionally, the binder resin may be used along with a non-conductive compound to improve adherence between the polymer electrolyte membrane and the catalyst layer. The amount of the binder resin used may be adjusted to its purpose.

Non-limiting examples of the non-conductive compound include polytetrafluoroethylene (PTFE), tetrafluoroethylene-hexafluoropropylene copolymers (FEP), tetrafluoroethyleneperfluoro alkyl vinylether copolymers (PFA), ethylene/tetrafluoroethylene (ETFE) copolymers, ethylenechlorotrifluoro-ethylene copolymers (ECTFE), polyvinylidene fluoride, polyvinylidene fluoride-hexafluoropropylene copolymers (PVdF-HFP), dodecyl benzene sulfonic acid, sorbitol, and combinations thereof.

The catalyst layers of the anode and the cathode are disposed on electrode substrates. Electrode substrates support the anode and the cathode, and provide a path for transferring fuel and an oxidant to the catalyst layer.

In an example embodiment of the present invention, the electrode substrate is formed from a material such as carbon paper, carbon cloth, or carbon felt, or a metal cloth (a metal film formed on a surface of porous cloth film or a cloth composed of polymer fibers). The electrode substrate is not limited thereto.

In addition, the electrode substrate may be treated with a fluorine-based resin to be waterrepellent, so that it can prevent deterioration of reactant diffusion efficiency due to water electrochemically generated at the cathode catalyst layer. The fluorine-based resin may include polytetrafluoroethylene, polyvinylidene fluoride, polyhexafluoropropylene, polyperfluoroalkylvinylether, polyperfluorosulfonylfluoridealkoxyvinyl ether, fluorinated ethylene propylene, polychlorotrifluoroethylene, or a copolymer thereof.

A microporous layer (MPL) can be added between the electrode substrate and catalyst layer to increase reactant diffusion effects. The microporous layer generally includes conductive powders with a certain particle diameter. The conductive material may include, but is not limited to, carbon powder, carbon black, acetylene black, activated carbon, carbon fiber, fullerene, nano-carbon, or combinations thereof. The nano-carbon may include a material such as carbon nanotubes, carbon nanofiber, carbon nanowire, carbon nanohorns, carbon nanorings, or combinations thereof.

The microporous layer is formed by coating a composition including a conductive powder, a binder resin, and a solvent on the electrode substrate. The binder resin may include, but is not limited to, polytetrafluoroethylene, polyvinylidenefluoride, polyhexafluoropropylene, polyperfluoroalkylvinylether, polyperfluorosulfonylfluoride, polyfluorinated alkoxyvinyl ether, polyvinylalcohol, celluloseacetate, or copolymers thereof. The solvent may include, but is not limited to, an alcohol such as ethanol, isopropyl alcohol, n-propyl alcohol, butanol, and so on, water, dimethyl acetamide, dimethyl sulfoxide, N-methylpyrrolidone, and tetrahydrofuran. The coating method may include, but is not limited to, screen printing, spray coating, and doctor blade methods, depending on the viscosity of the composition.

On each side of the membrane-electrode assembly as above described, separators are disposed. The separators are the same as the above described separator.

The fuel supplier supplies the electricity generating element with a fuel such as hydrogen, and the oxidant supplier plays a role of supplying the electricity generating element with an oxidant such as oxygen or air. The fuel includes liquid or gaseous hydrogen, or a hydrocarbon-based fuel such as methanol, ethanol, propanol, butanol, or natural gas.

The fuel cell system may be applied to a polymer electrolyte fuel cell (PEMFC), or a direct oxidation fuel cell (DOFC). The effect of the fuel cell system can be maximized in a direct oxidation fuel cell, particularly in a breathing-type direct oxidation fuel cell or a passive-type direct oxidation fuel cell, in which the cathode has relatively less flow

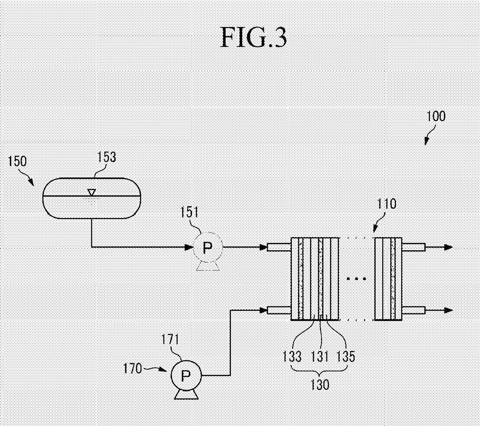

FIGURE 3 shows a schematic structure of a fuel cell system according to an example embodiment of the present invention. As shown in FIGURE 3, a fuel cell system 100 has a fuel and an oxidant provided to an electricity generating element 130 through pumps 151 and 171 however, the present invention is not limited to such a structure. The fuel cell system of the present invention may alternatively include a structure wherein a fuel and an oxidant are provided in a diffusion manner.

Turning now to FIGURE 3, the fuel cell system 100 includes a stack 110 composed of at least one electricity generating element 130 that generates electrical energy through an electrochemical reaction of a fuel and an oxidant, a fuel supplier 150 for supplying the fuel to the electricity generating element 130, and an oxidant supplier 170 for supplying the oxidant to the electricity generating element 130.

In addition, the fuel supplier 150 is equipped with a tank 153 that stores the fuel, and the pump 151 is connected therewith. The fuel pump 151 supplies the fuel stored in the tank 153 with a predetermined pumping power.

The oxidant supplier 170, which supplies the electricity generating element 130 of the stack 110 with the oxidant, is equipped with at least one pump 171 for supplying the oxidant with a predetermined pumping power.

The electricity generating element 130 includes a membrane-electrode assembly 131 that oxidizes hydrogen or the fuel and reduces the oxidant, and separators 133 and 135 that are respectively positioned at opposite sides of the membrane-electrode assembly 131 and respectively supply hydrogen or the fuel, and the oxidant.

The following examples illustrate the present invention in more detail. However, it is understood that the present invention is not limited by these examples.

### Example 1

A substrate made of graphite was immersed in a mixed solvent of sulfuric acid and hydrogen peroxide mixed in a volume ratio of 30:70 for 30 minutes. The acid treated substrate was washed with distilled water and dried under a nitrogen atmosphere. Then, it was radiated with UV rays for 10 minutes to oxidize the surface. UV treatment was accomplished by putting the substrates into a UV ozone box with a built-in short wavelength (254 nm) pencil lamp.

The oxidized substrate was dipped in 10 mM of a (3-aminopropyl)triethoxysilane solution for 12 hours for chemical adsorption. Then, the substrate was washed with toluene in an ultrasonic bath. It was dried at 30°C under a nitrogen atmosphere, thus preparing a separator for a fuel cell including a 100 nm-thick surface-treatment layer.

### Example 2

The separator including a surface-treatment layer prepared in Example 1 was post-treated at 200 W under an O₂ plasma for 3 minutes to prepare a separator for a fuel cell.

### Example 3

The separator including a surface-treatment layer prepared in Example 1 was radiated with UV rays for 5 minutes to prepare a separator for a fuel cell. UV treatment was accomplished by putting the separators into a UV ozone box with a built-in short wavelength (254 nm) pencil lamp.

### Example 4

A separator for a fuel cell was prepared by the same method as Example 2 except that 10 mM of a 2-(carboxylmethylthio)ethyltrimethylsilane solution instead of 10 mM of a (3-aminopropyl)triethoxysilane solution was used for the surface treatment.

### Example 5

A separator for a fuel cell was prepared by the same method as Example 3 except that 10 mM of a (3-heptafluoroisopropoxy)propyl trichlorosilane solution instead of 10 mM of a (3-aminopropyl)triethoxysilane solution was used for the surface treatment.

### Example 6

A separator for a fuel cell was prepared by the same method as Example 3 except that a mixed solution of 10 mM of 3-aminopropyltriethoxysilane and (3-heptafluoroisopropoxy)propyl trichlorosilane instead of 10 mM of a 3-aminopropyltriethoxysilane solution was used for the surface treatment.

### Example 7

A separator was fabricated by the same method as Example 1 except that a substrate made of a stainless steel metal was pre-treated with sand paper.

### Comparative Example 1

A graphite plate having a flow channel was used as a separator.

### Comparative Example 2

A substrate made of graphite was coated with a mixed solution of polyacrylonitrile and dimethylformaldehyde mixed in a weight ratio of 30:70 at room temperature, and dried under a nitrogen atmosphere to prepare a separator for a fuel cell including a coating layer.

### Comparative Example 3

A substrate made of graphite was coated with a polytetrafluoroethylene compound at room temperature, and dried under a nitrogen atmosphere to prepare a separator for a fuel cell including a hydrophobic surface-treatment layer.

The separators according to Examples 1 to 3 and Comparative Examples 1 to 3 were evaluated regarding a contact angle of the surface-treatment layers thereon and a hydrophilic functional group formed on the surface-treatment layers by using a measurement device for a contact angle (KRÜSS, DSA 100) and deionized water. The results are shown in the following Table 1.

**Table 1**

| | Contact angle | Hydrophilic functional group |
|---|---|---|
| Example 1 | 5° | -OH |
| Example 2 | 28° | -OH, -COOH, -CO |
| Example 3 | 7° | -OH, -COOH, -CO |
| Comparative Example 1 | 40° | - |
| Comparative Example 2 | 62° | -CH₃CN |
| Comparative Example 3 | 108° | -CF₂ |

As shown in Table 1, the graphite plates according to Comparative Examples 1 to 3 had a contact angle over 30° on the surface, while the separators according to Examples 1 to 3 had a surface treatment layer having a contact angle of 30°or less. Accordingly, their surface treatment layers were hydrophilic.

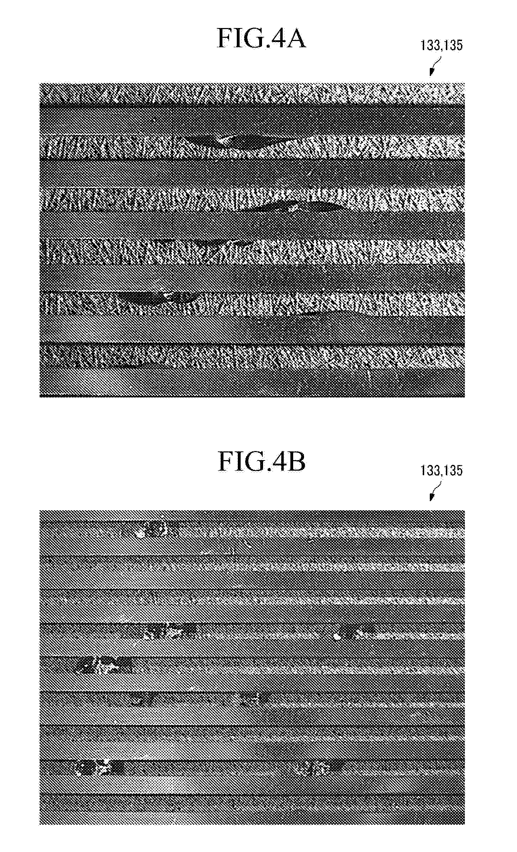

Separators according to Example 1 and Comparative Example 1 were examined regarding liquid flow characteristics and the results are shown in FIGURES 4A and 4B. FIGURE 4A is a photograph showing liquid flow in a separator according to Example 1, and FIGURE 4B is a photograph showing liquid flow in a separator according to Comparative Example 1.

As shown in FIG 4A, a separator prepared according to Example 1 can supply easily a fluid because the fluid wets the surface of the fluid channel in the separator. However, as shown in FIG 4B, a separator prepared according to Comparative Example 1 having a contact angle over 30°on the surface, cannot easily supply a fluid because the fluid cannot contact with the surface of the fluid channel in the separator, and can easily agglomerate to prevent the fluid flowing.

The separators according to Examples 1 to 3 and Comparative Examples 1 to 3 were used to fabricate a single cell. The single cells were examined regarding characteristics.

First of all, Pt black (HiSPEC^{®} 1000, Johnson Matthey Co.) and Pt/Ru black (HiSPEC^{®} 6000, Johnson Matthey Co.) were mixed in a weight ratio of 5:5 to prepare a mixed catalyst. 10 parts by weight of the mixed catalyst were added to a mixed solvent of water and isopropy lalcohol mixed in a weight ratio of 10:80. Next, 40 parts by weight of a 10 wt% NAFION^{®} (DuPont Co.) water-based dispersion solution were added to the solvent. Then, the mixture was irradiated with ultrasound and uniformly agitated together, preparing a composition for a catalyst layer.

Then, the composition for a catalyst layer was spray-coated on a carbon paper substrate (the substrate for the cathode and the anode can be SGL^{®} 31BC/10DA; SGL Carbon Group Co.) treated with TEFLON^{®} (DuPont Co. polytetrafluoroethylene), preparing a cathode. An anode was prepared by using a Pt/Ru black catalyst by the same method as aforementioned. Herein, the anode was coated to have a 6 mg/cm²-thick catalyst layer, and the cathode to have a 4 mg/cm²-thick catalyst layer, thereby preparing an electrode.

Next, the prepared electrodes were respectively stacked at both sides of a polymer electrolyte membrane (NAFION^{®} 115 Membrane, DuPont Co.) for a fuel cell, preparing a membrane-electrode assembly.

The membrane-electrode assembly was inserted between gaskets. Then, the separators according to Examples 1 to 7 and Comparative Examples 1 to 3 were positioned at both sides of the membrane-electrode assembly inserted between the gaskets, and thereafter, they were all compressed between copper end plates, fabricating a single cell.

The single cells were respectively supplied with air and 1M of methanol, operated at 70°C for 10 hours, and thereafter, measured regarding voltage. The results are shown in the following Table 2.

**Table 2**

| | Operating voltage at 200mA/cm² (V) |
|---|---|
| Example 1 | 0.35 |
| Comparative Example 1 | 0.30 |

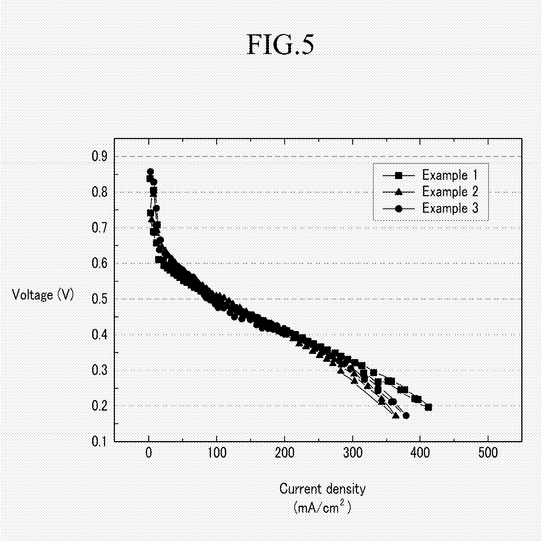

A cell was fabricated by the same method as above except that the anode was coated to have an 8 mg/cm² thick Pt/Ru catalyst layer, and the cathode to have a 4 mg/cm² thick Pt catalyst layer, thereby preparing an electrode. The single cells were respectively supplied with air and 1M of methanol, operated at 70°C for 10 hours, and thereafter, measured regarding voltage. The results are shown in the following Table 3, and FIGURES 5 to 8.

**Table 3**

| | Operating voltage at 200mA/cm² (V) |
|---|---|
| Example 1 | 0.43 |
| Example 2 | 0.41 |
| Example 3 | 0.42 |
| Comparative Example 1 | 0.37 |
| Comparative Example 2 | 0.35 |
| Comparative Example 3 | 0.33 |

As shown in Table 2 and 3, single cells including the separators prepared according to Examples 1 to 3 had higher operating voltages than those including the separators according to Comparative Examples 1 to 3. As a result, the single cells according to Examples 1 to 7 had excellent output characteristics.

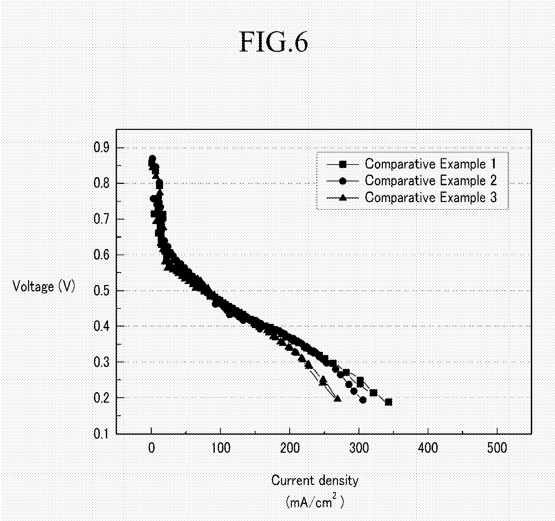

FIGURE 5 is a graph showing voltage drop of single cells including the separators according to Examples 1 to 3, and FIGURE 6 is a graph showing voltage drop of single cells including the separators according to Comparative Examples 1 to 3. As shown in FIGURE 5 and 6, the cells including the separators prepared according to Examples 1 to 3 showed a decreased voltage drop property compared with the cells including the separators prepared according to

### Comparative Examples 1 to 3.

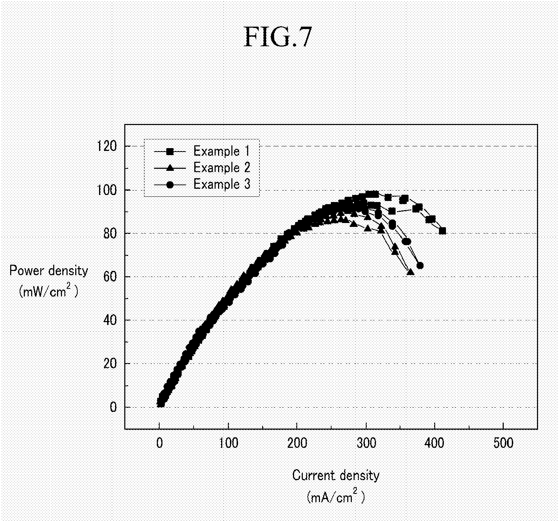

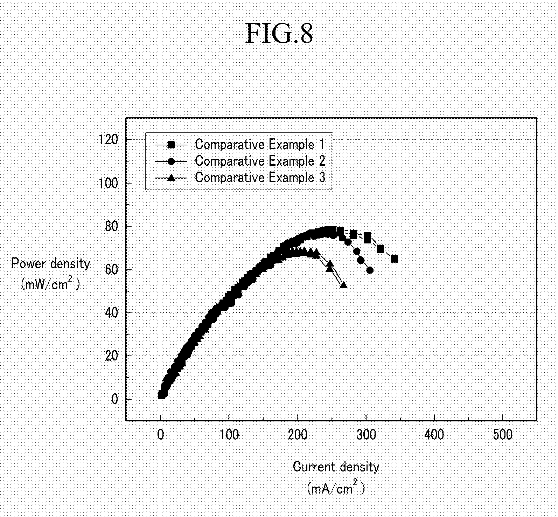

FIGURE 7 is a graph showing output power density of single cells including the separators according to Examples 1 to 3, and FIGURE 8 is a graph showing output power density of single cells including the separators according to Comparative Examples 1 to 3. As shown in FIGURE 7 and 8, the cells including the separators prepared according to Examples 1 to 3 showed improved power density compared with the cells including the separators prepared according to Comparative Examples 1 to 3.

The separator for a fuel cell of the present invention can smoothly supply an oxidant and a fuel by easily releasing reaction products produced during electrochemical reactions of a fuel cell, and thereby, can improve fuel cell characteristics.

While there have been illustrated and described what are considered to be examples or embodiments of the present invention, it will be understood by those skilled in the art and as technology develops that various changes and modifications may be made to adapt the teachings of the present invention to a particular situation. For example, the substrate 20 of FIGURE 1 can be made of other materials than those listed in the specification. The flow channels 40 of FIGURE 1 can have different shapes. The surface treatment layer 50 of FIGURE 1 can be formed of different materials and by different processes than those listed in the specification. Analogous surface treatment layers can be formed that impart different characteristics, e.g., hydrophobicity. Finally, similar structures to those of FIGURE 1 can be used to improve flow through small channels of any fluid. Accordingly, it is intended, therefore, that the present invention should not be limited to the various examples or embodiments disclosed, but that the present invention includes all embodiments falling within the scope of the appended claims.

## Claims

1. A separator for a fuel cell, comprising:
a substrate including flow channels; and
a surface-treatment layer disposed on the flow channels,
wherein the surface-treatment layer has a contact angle no more than 30° when measured with water.

2. The separator of claim 1, wherein the surface-treatment layer has a contact angle no more than 20° when measured with water.

3. The separator of claims 1 or 2, wherein the surface-treatment layer comprises a hydrophilic functional group including an element selected from the group consisting of oxygen, nitrogen, sulfur, and combinations thereof.

4. The separator of claim 3, wherein the surface-treatment layer comprises a hydrophilic functional group selected from the group consisting of hydroxyl (OH), amino (NH₂), carboxyl (COOH), carbonyl (CO), sulfonic acid (SO₃H), alkoxy, and combinations thereof.

5. The separator of any one of claims 1 to 4, wherein the substrate is made of at least one material selected from the group consisting of a metal, graphite, a carbon-resin composite, and combinations thereof.

6. The separator of any one of the preceding claims, wherein the substrate is subjected to surface pre-treatment selected from the group consisting of polarization using radioactive rays, oxidation, sand papering, corona treatment, rubbing, pressing, and combinations thereof.

7. A method of manufacturing a separator for a fuel cell, comprising:
forming a flow channel in a substrate;
forming a surface-treatment layer in the flow channel using a composition including a silane compound having a hydrophilic functional group; and
washing and drying the substrate including the surface-treatment layer.

8. The method of claim 7, wherein the substrate is subjected to a surface pre-treatment selected from the group consisting of polarization using radioactive rays, oxidation, sand papering, corona treatment, rubbing, pressing, and combinations thereof.

9. The method of claims 7 or 8, wherein the substrate is subjected to a surface pre-treatment comprising UV radiation after acid treatment.

10. The method of claims 7, 8 or 9, wherein the silane compound having a hydrophilic functional group is represented by the following Formula 1:
[Chemical Formula 1] X-Si(R¹)₃ ,
wherein, in the above Formula 1, X is a hydrophilic functional group including an element selected from the group consisting of oxygen, nitrogen, sulfur, and combinations thereof, or X is an alkyl group substituted with the hydrophilic functional group, and R¹ is hydrogen, alkyl, alkoxy, or a halogen.

11. The method of claim 10, wherein X is a hydrophilic functional group selected from the group consisting of hydroxyl (OH), amino (NH₂), carboxyl (COOH), carbonyl (CO), sulfonic acid (SO₃H), alkoxy, and combinations thereof, or X is an alkyl group substituted with the hydrophilic functional group.

12. The method of claims 10 or 11, wherein the silane compound having a hydrophilic functional group is at least one compound selected from the group consisting of 3-aminoalkyltrialkoxysilane, 2-(carboxylalkylthio)alkyltrialkylsilane, (3-heptafluoroalkoxy)alkyl trihalogensilane, and combinations thereof.

13. The method of any one of claims 7 to 12, wherein the concentration of the silane compound having a hydrophilic functional group is in the range of 5 to 500 mM.

14. The method of any one of claims 7 to 13, wherein the washing is performed using a solvent selected from the group consisting of toluene, acetone, and combinations thereof.

15. The method of any one of claims 7 to 14, wherein the drying is performed under a reduction atmosphere.

16. The method of any one of claims 7 to 15, wherein the drying is performed at a temperature of 20 to 50° C.

17. The method of any one of claims 7 to 16, further comprising:
washing the substrate with the surface-treatment layer, and drying the substrate with the surface treatment layer; and
performing surface post-treatment of the substrate with the surface-treatment layer, wherein the post-treatment is selected from the group of methods consisting of UV radiation, plasma treatment, and combinations thereof.

18. A fuel cell system comprising:
a fuel supplier to supply fuel;
an oxidant supplier to supply an oxidant; and
one or more electricity generating elements, each comprising:
separators arranged to supply fuel and oxidant; and
a membrane-electrode assembly disposed between the separators, to oxidize the fuel and reduce the oxidant,
wherein each separator comprises a substrate including flow channels, and a surface-treatment layer disposed on the flow channels, the surface-treatment layer having a contact angle no more than 30° when measured with water.

19. The fuel cell system of claim 18, wherein the surface-treatment layer has a contact angle no more than 20° when measured with water.

20. The fuel cell system of claims 18 or 19, wherein the surface-treatment layer comprises a hydrophilic functional group including an element selected from the group consisting of oxygen, nitrogen, sulfur, and combinations thereof.

21. The fuel cell system of claim 20, wherein the surface-treatment layer comprises a hydrophilic functional group selected from the group consisting of hydroxyl (OH), amino (NH₂), carboxyl (COOH), carbonyl (CO), sulfonic acid (SO₃H), alkoxy, and combinations thereof.

22. The fuel cell system of any one of claims 18 to 21, wherein the substrate is made of a material selected from the group consisting of a metal, graphite, a carbon-resin composite, and combinations thereof.

23. The fuel cell system of any one of claims 18 to 22, wherein the substrate is subjected to a surface pre-treatment selected from the group of methods consisting of polarization using radioactive rays, oxidation, sand papering, corona treatment, rubbing, pressing, and combinations thereof.

24. The fuel cell system of any one of claims 18 to 23, wherein the fuel cell system is a direct oxidation fuel cell system.

25. The fuel cell system of claim 24, wherein the fuel cell system is a breathing-type or passive-type direct oxidation fuel cell system.

26. An electricity generating element, comprising:
separators arranged to supply fuel and oxidant; and
a membrane-electrode assembly disposed between the separators, to oxidize the fuel and reduce the oxidant,
wherein each separator comprises a substrate including flow channels and a surface-treatment layer disposed on the flow channels, the surface-treatment layer having a contact angle no more than 30° when measured with water.

27. The electricity generating element of claim 26, wherein the surface-treatment layer has a contact angle no more than 20° when measured with water.

28. The electricity generating element of claims 26 or 27, wherein the surface-treatment layer comprises a hydrophilic functional group including an element selected from the group consisting of oxygen, nitrogen, sulfur, and combinations thereof.

29. The electricity generating element of claim 28, wherein the surface-treatment layer comprises a hydrophilic functional group selected from the group consisting of hydroxyl (OH), amino (NH₂), carboxyl (COOH), carbonyl (CO), sulfonic acid (SO₃H), alkoxy, and combinations thereof.

30. The electricity generating element of any one of claims 26 to 29, wherein the substrate is made of a material selected from the group consisting of a metal, graphite, a carbon-resin composite, and combinations thereof.

31. The electricity generating element of any one of claims 26 to 30, wherein the substrate is subjected to a surface pre-treatment selected from the group of methods consisting of polarization using radioactive rays, oxidation, sand papering, corona treatment, rubbing, pressing, and combinations thereof.

32. The electricity generating element of any one of claims 26 to 31, wherein the fuel cell is a direct oxidation fuel cell.

33. The electricity generating element of claim 32, wherein the fuel cell is a breathing-type or passive-type direct oxidation fuel cell.

34. The separator of claim 2, wherein the surface-treatment layer has a contact angle no more than 10° when measured with water.

35. The separator of claim 34, wherein the surface-treatment layer has a contact angle ranging from 0.001° to 5° when measured with water.

36. The separator of claims 2, 33 or 34, wherein the water is deionized water.

37. The method of claim 8, wherein the substrate is subjected to a surface pre-treatment comprising oxidation.

38. The method of claim 9, wherein the acid treatment comprises immersion in a solution of sulfuric acid and hydrogen peroxide, wherein the sulfuric acid and hydrogen peroxide are mixed in a volume ratio ranging from 10:90 to 40:60.

39. The method of claim 38, wherein the sulfuric acid and hydrogen peroxide are mixed in a volume ratio of 30:70.

40. The method of claim 9, wherein the UV radiation is performed for a period ranging from 10 minutes to 10 hours at a temperature ranging from 50° C to 70° C.

41. The method of claim 12, wherein the silane compound having the hydrophilic functional group includes at least one compound selected from the group consisting of (3-aminopropyl)triethoxysilane, 2-(carboxylmethylthio)ethyltrimethylsilane, (3-heptafluoroisopropoxy)propyl trichlorosilane, and combinations thereof.

42. The method of claim 10, wherein the silane compound includes a solvent selected from water, an organic solvent, or a mixed solvent

43. The method of claim 42, wherein the organic solvent comprises a solvent having compatibility with water selected from the group consisting of an alcohol solvent; a cellosolve-based solvent; dimethylformamide; and acetone.

44. The method of claim 13, wherein the concentration of the silane compound having a hydrophilic functional group is in the range of 5 to 20 mM.

45. The fuel cell system of claim 19, wherein the surface-treatment layer has a contact angle no more than 10° when measured with water.

46. The fuel cell system of claim 45, wherein the surface-treatment layer has a contact angle ranging from 0.001° to 5° when measured with water.

47. The fuel cell system of claim 19, 45 or 46, wherein the water is deionized water.

48. The electricity generating element of claim 27, wherein the surface-treatment layer has a contact angle no more than 10° when measured with water.

49. The electricity generating element of claim 46, wherein the surface-treatment layer has a contact angle ranging from 0.001° to 5° when measured with water.

50. The electricity generating element of claim 27, 48 or 49, wherein the water is deionized water.

51. Separator for a fuel cell obtainable by a method as claimed in any one of claims 7 to 17 or 37 to 44.

52. Fuel cell system or electricity generating element comprising a separator as claimed in any one of claims 1 to 6, 34, 35 or 36.

53. Use of a separator as claimed in any one of claims 7 to 17, 37 to 44 or 51, for a fuel cell system or electricity generating element.
